# EUROPEAN PATENT SPECIFICATION

(11) **EP 2 693 838 B1**
(45) Date of publication and mention of the grant of the patent: **13.01.2016**
(21) Application number: 12764052.2
(22) Date of filing: 13.03.2012
(51) Int. Cl.: H05B 6/12, H05B 6/06

(54) **INDUCTION HEAT COOKER**
INDUKTIONSHERD
CUISINIÈRE À INDUCTION

(30) Priority: 29.03.2011 JP 2011072337
(43) Date of publication of application: 05.02.2014
(73) Proprietor: Mitsubishi Electric Corporation, Tokyo 100-8310 (JP); Mitsubishi Electric Home Appliance Co., Ltd., Fukaya-shi, Saitama 369-1295 (JP)
(72) Inventor: TANAKA, Michio, Fukaya-shi, Saitama 369-1295 (JP); NINAGAWA, Hiromi, Fukaya-shi, Saitama 369-1295 (JP); KAWATA, Yukio, Fukaya-shi, Saitama 369-1295 (JP)
(74) Representative: Pfenning, Meinig & Partner GbR
(86) International application number: PCT/JP2012/001734
(87) International publication number: WO 2012/132275

(56) References cited:
- WO-A1-2010/041354
- WO-A1-2010/101135
- WO-A1-2010/101202
- WO-A1-2010/137271
- JP-A- 1 109 678
- JP-A- 2004 186 002
- JP-A- 2009 218 106

## Description

### Technical Field

The present invention relates to an induction heating cooker including a plurality of induction heating units.

### Background Art

Conventionally, an induction heating cooker including a plurality of induction heating units allows heating coils of the induction heating units to be independently energized, and, further, allows each induction heating unit to be supplied with power and to carry out heating of an object to be heated (metal pan) with a predetermined heating power (quantity of heat).

However, the size (outside diameter of the bottom portion) of a pan that is subject to heating is not always necessarily fixed and there are cases in which the shape of the bottom does not have a circular shape. Accordingly, there has been proposed a known induction heating cooker that is capable of induction heating cooking by bridging a large or laterally long single object to be heated, such as a large pan, a large griddle, or a laterally long fish-broiling pan, over a plurality of adjacent induction heating units and performing synchronizing and cooperative control of heating power outputs of the adjacent induction heating units (Patent Literature 1, for example).

Incidentally, in actual cooking, the frequency of a large pan, a large griddle, or a laterally long fish-broiling pan being used is not so high. Rather, it has been learned that by devising the heating cooker to cope with pans with different sizes, usability is consequently improved.

WO 2010/101135 A1 describes an induction cooking device which is provided with a center coil wound in a planar shape, a plurality of peripheral coils adjacent to and wound around the periphery of the center coil, and a high-frequency power supply for supplying high-frequency current independently to the center coil and each peripheral coil.

WO 2010/137271 A1 describes an induction cooking device equipped with a plurality of induction heating coils and with which it is possible to suppress the noise during operation.

### Citation List

### Patent Literature

Patent Literature 1: Japanese Unexamined Patent Application Publication No. 2011-9079 (p. 1, Fig. 1)

### Summary of Invention

### Technical Problem

Generally, an installation space where induction heating units are installed and an area of a top plate on which a pan is placed are limited. As such, it is not easy to increase the number of induction heating units with the aim to cope with pans with a variety of diameters and shapes; accordingly, it has been a problem to increase the number of sizes and shapes of the pan that can be coped with, without increasing the number of induction heating units.

Accordingly, an object of the invention is to provide an induction heating cooker including a plurality of induction heating units in which the induction heating cooker is capable of not only sole heating of an object to be heated that is placed above a particular induction heating unit but also heating of a large or a laterally long non-circular object to be heated by means of two or more adjacent induction heating units and coping with objects to be heated with more variety in size.

### Solution to Problem

In order to address the above problem, an induction heating cooker according to a first aspect of the invention includes: a first induction heating unit that cooperatively heats a single object to be heated with two or more heating coils that are adjacent to each other and that are heat driven independently of each other; a second induction heating unit that is arranged and disposed laterally next to the first induction heating unit, the second induction heating unit including a circular main heating coil at a center portion and a plurality of side heating coils adjoining the main heating coil, sole heating being allowed with the main heating coil, cooperative heating being allowed with the main heating coil and the side heating coils; a top plate positioned above the first and second induction heating units, the top plate being placed with the object to be heated; inverter circuits that each supplies high-frequency power to a corresponding one of the first and second induction heating units individually; an energization control circuit that sends a heating operation start/stop command and a heating power command to the inverter circuits; and an operating unit that sends an operation signal to the energization control circuit, in which an outside diameter dimension of the first induction heating unit is configured to be smaller than a heating-unit outside diameter dimension of the second induction heating unit and is configured to be larger than a main-heating-coil outside diameter dimension of the second induction heating unit.

Having such a configuration, when heat cooking with a normal circular pan, either one of the first and second induction heating units can carry out heat cooking with a desired heating power instructed from an operating unit. On the other hand, when a large or laterally long object to be heated is used, heat cooking can be carried out with the object to be heated by bridging the large or laterally long object to be heated over two or more adjacent heating coils in the first induction heating unit and switching the heating coils under this object to be heated to a cooperative heating mode. Alternately, heat cooking can be carried out with the object to be heated by switching a main heating coil and at least one of side heating coils in the second induction heating unit to a cooperative heating mode. Furthermore, since the outside diameter dimension of the first induction heating unit is configured to be smaller than the heating-unit outside diameter dimension of the second induction heating unit and is configured to be larger than a main-heating-coil outside diameter dimension of the second induction heating unit, an object to be heated with a size that is not suitable for heating with the second induction heating unit can be heated with the first induction heating unit.

An induction heating cooker according to a second aspect of the invention includes: a first induction heating unit that cooperatively heats a single object to be heated with two or more heating coils that are adjacent to each other and that are heat driven independently of each other; a second induction heating unit that is arranged and disposed laterally next to the first induction heating unit, the second induction heating unit including a circular main heating coil at a center portion and a plurality of side heating coils adjoining the main heating coil, sole heating being allowed with the main heating coil, cooperative heating being allowed with the main heating coil and the side heating coils; a top plate positioned above the first and second induction heating units, the top plate being placed with the object to be heated; inverter circuits that each supplies high-frequency power to a corresponding one of the first and second induction heating units individually; an energization control circuit that sends a heating operation start/stop command and a heating power command to the inverter circuits; and an operating unit provided in front of the top plate, the operating unit configured to provide an operation signal to the energization control circuit, win which an outside diameter dimension of the first induction heating unit is configured to be smaller than a heating-unit outside diameter dimension of the second induction heating unit and is configured to be larger than a main-heating-coil outside diameter dimension of the second induction heating unit, and a facing distance between the first induction heating unit and the second induction heating unit is larger than a distance from the first induction heating unit to the operating unit.

Having such a configuration, when heating a laterally long object to be heated with the first induction heating unit, in addition to the advantageous effect of the first aspect of the invention, problems can be overcome such as the outer circumference of the object to be heated bulging out over the second induction heating unit, the outer circumference of the object to be heated extending over the operating unit so as to get in the way of other cooking carried out with the second induction heating unit, or the outer circumference of the object to be heated obstructing operation of the operating unit. Advantageous Effects of Invention

Configured as above, the invention is, naturally, capable of carrying out normal heat cooking by performing individual control of the heating power of the first and second induction heating units. Further, when a large-diameter pan or a laterally long heating body is used, the invention is capable of carrying out heating in a cooperative heating mode by using a plurality of heating coils of the first and second induction heating units on the basis of the size and shape of the object to be heated, and is capable of providing an induction heating cooker with high usability that can further cope with the change in size of the object to be heated.

### Brief Description of Drawings

[Fig. 1] Fig. 1 is a perspective view illustrating an induction heating cooker according to Embodiment 1 of the invention.
[Fig. 2] Fig. 2 is a block diagram illustrating an overall configuration of the induction heating cooker according to Embodiment 1 of the invention.
[Fig. 3] Fig. 3 is a plan view illustrating the induction heating cooker according to Embodiment 1 of the invention.
[Fig. 4] Fig. 4 is an explanatory diagram of a second induction heating unit of the induction heating cooker according to Embodiment 1 of the invention.
[Fig. 5] Fig. 5 is an explanatory circuit diagram of the second induction heating unit of the induction heating cooker according to Embodiment 1 of the invention.
[Fig. 6] Fig. 6 is an explanatory diagram illustrating a configuration of heating coils of the second induction heating unit of the induction heating cooker according to Embodiment 1 of the invention.
[Fig. 7] Fig. 7 is an explanatory diagram of a main heating coil of the second induction heating unit of the induction heating cooker according to Embodiment 1 of the invention.
[Fig. 8] Fig. 8 is a plan view illustrating a first exemplary operation of the induction heating cooker according to Embodiment 1 of the invention.
[Fig. 9] Fig. 9 is a plan view illustrating a second exemplary operation of the induction heating cooker according to Embodiment 1 of the invention.
[Fig. 10] Fig. 10 is a plan view illustrating a third exemplary operation of the induction heating cooker according to Embodiment 1 of the invention.
[Fig. 11] Fig. 11 is a plan view illustrating a first exemplary operation of the induction heating cooker according to Embodiment 2 of the invention.
[Fig. 12] Fig. 12 is a plan view illustrating a second exemplary operation of the induction heating cooker according to Embodiment 2 of the invention. Description of Embodiments

### Embodiment 1

Embodiment 1 of the invention will be described below with reference to the accompanying drawings.

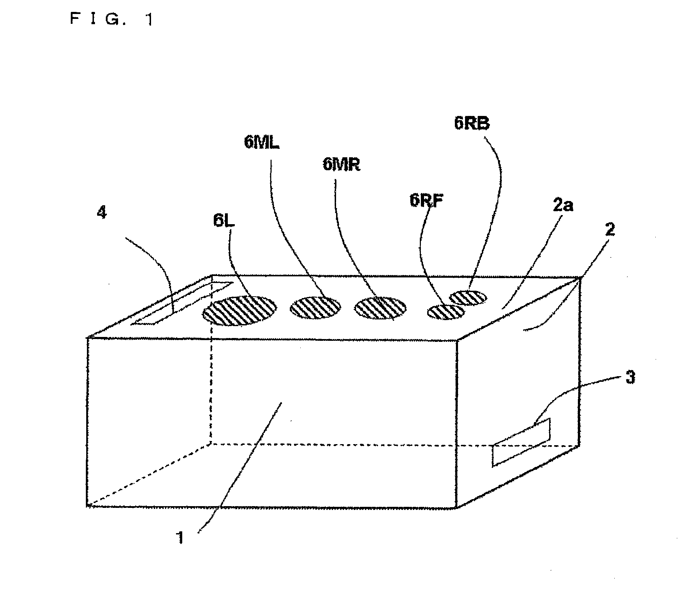

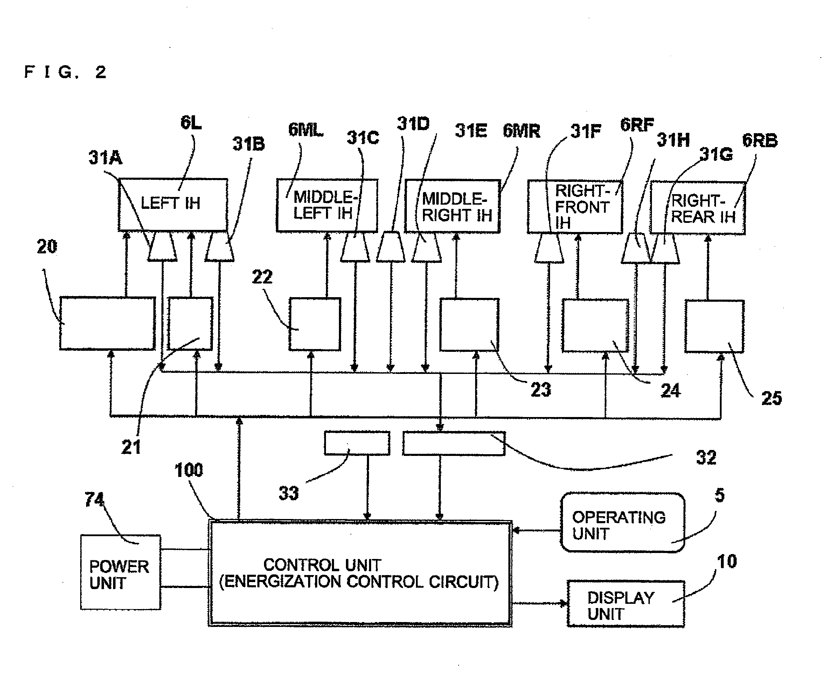

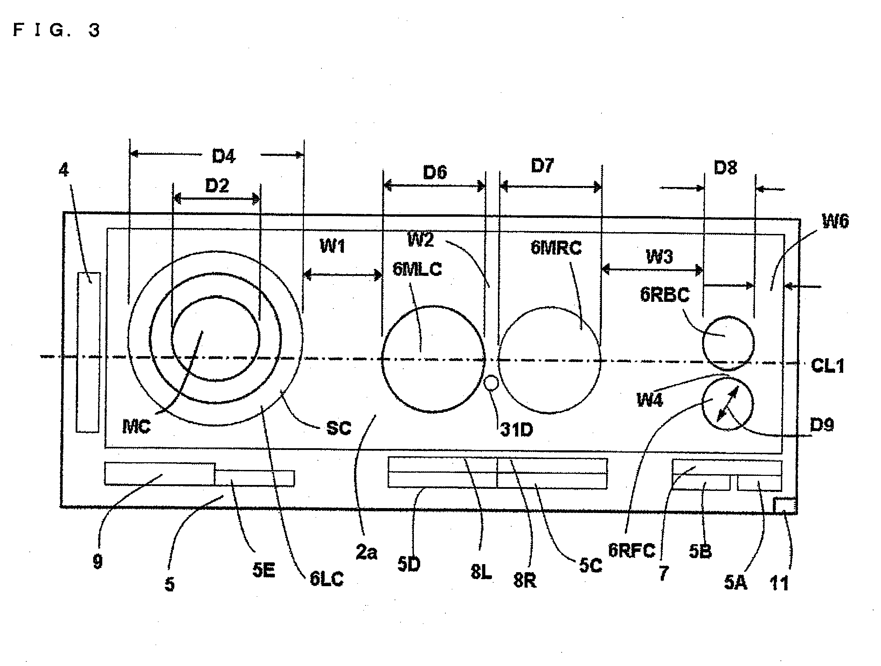

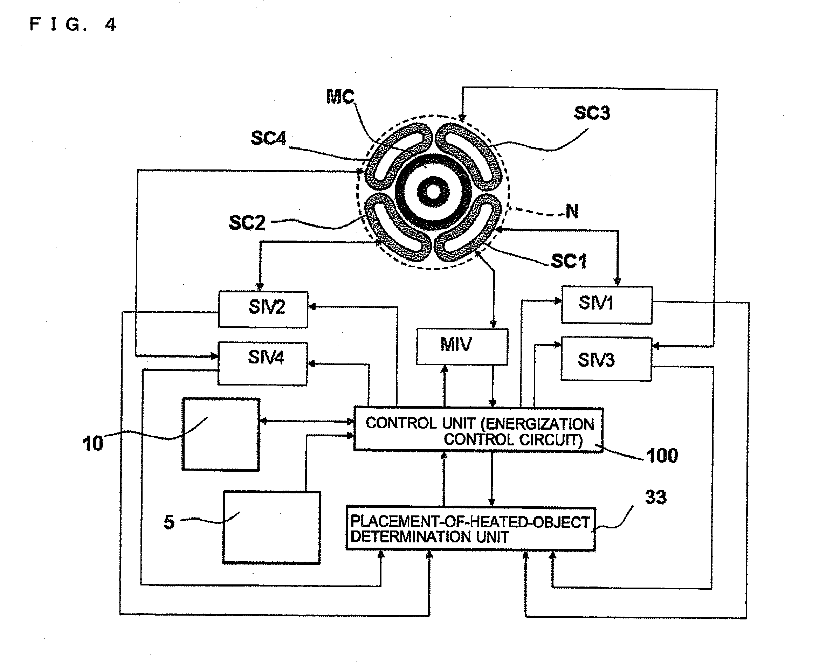

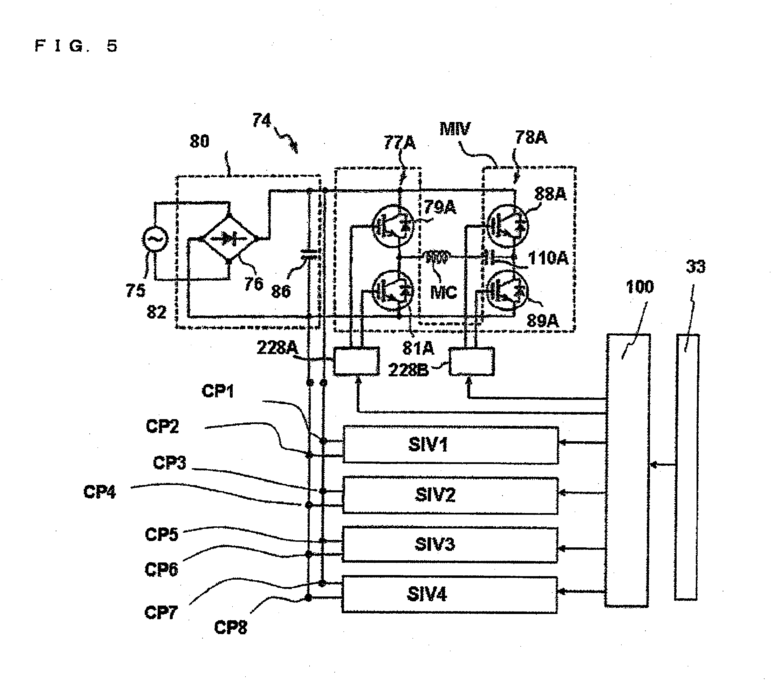

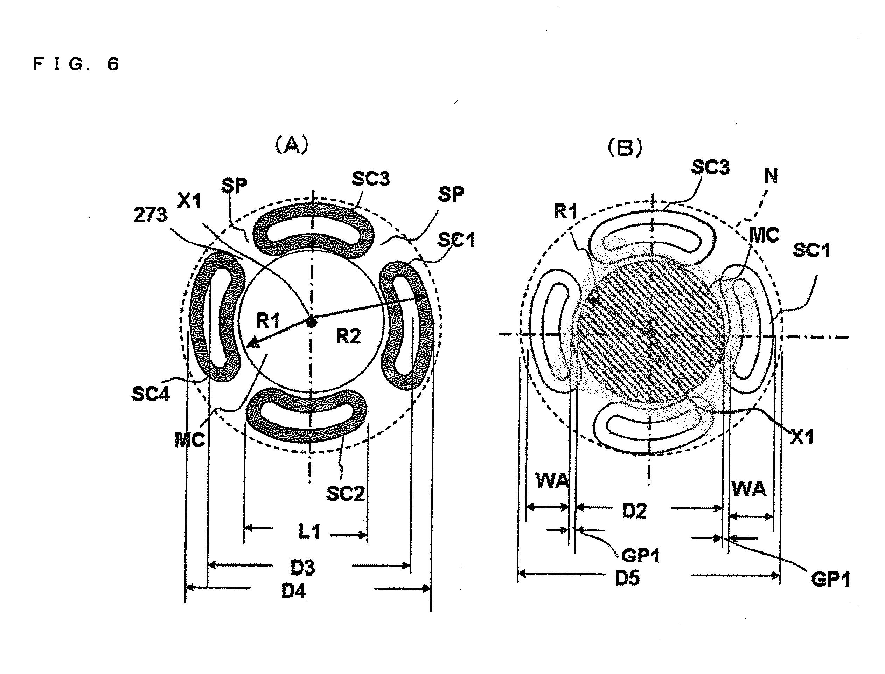

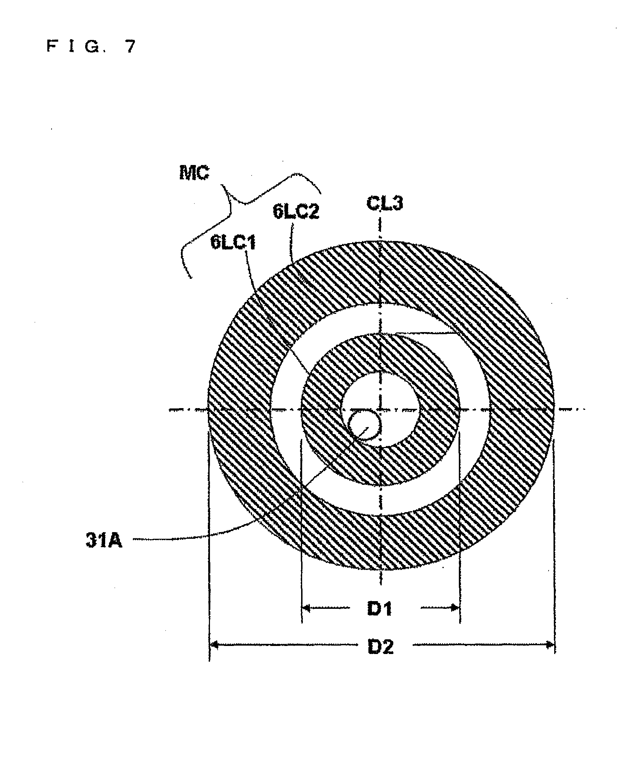

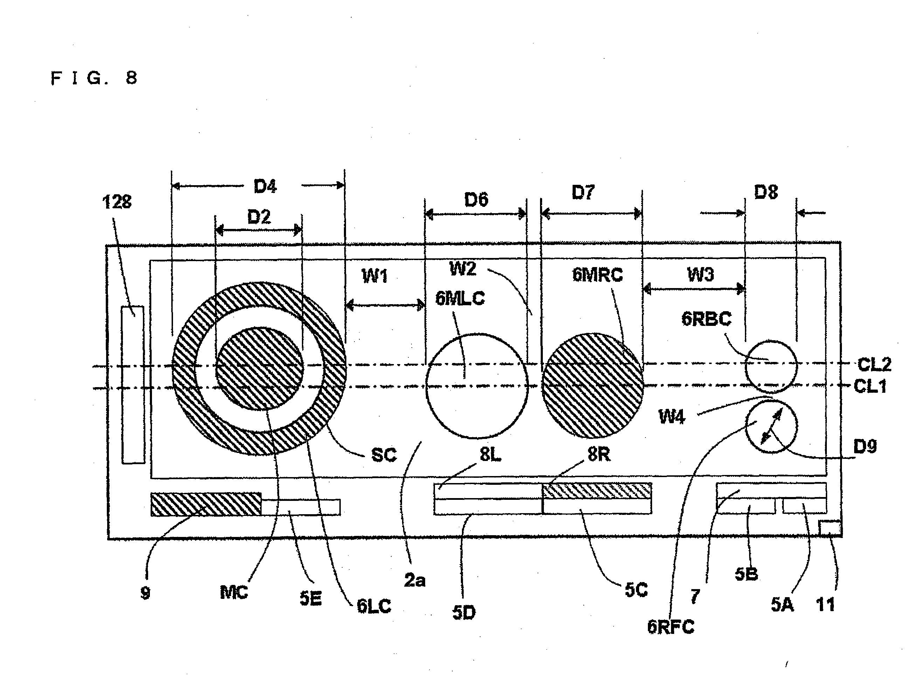

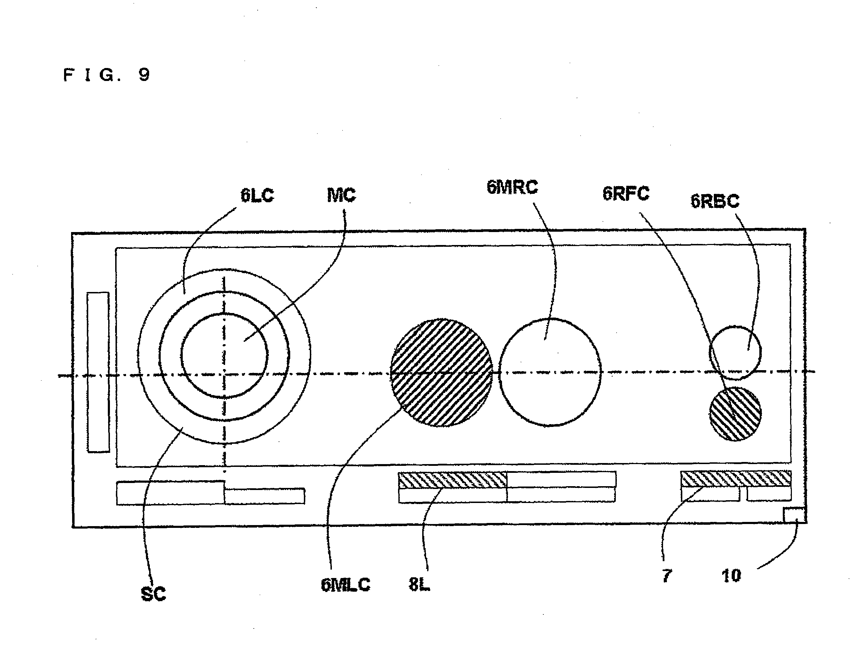

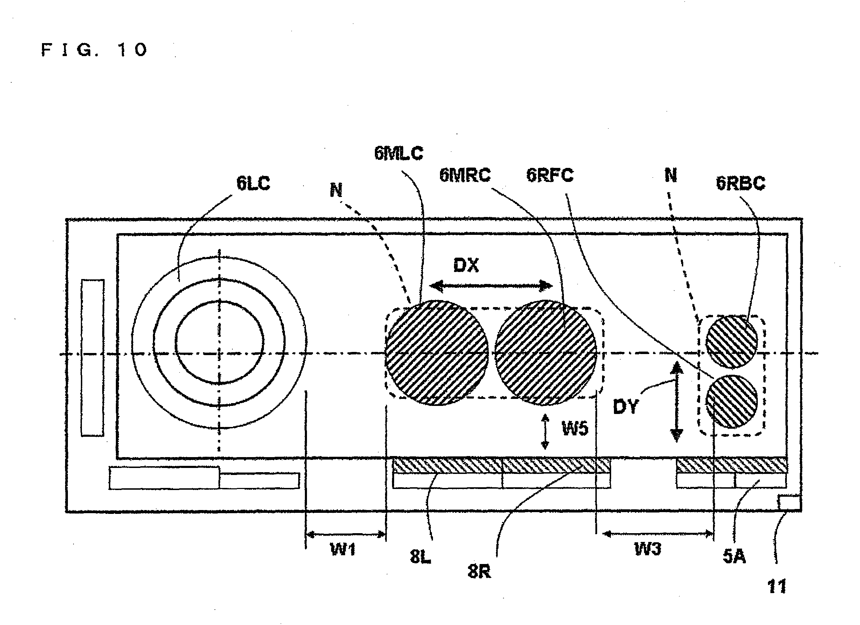

Fig. 1 is a perspective view illustrating an induction heating cooker according to Embodiment 1 of the invention. Fig. 2 is a block diagram illustrating an overall configuration of the induction heating cooker according to Embodiment 1 of the invention. Fig. 3 is a plan view illustrating the induction heating cooker according to Embodiment 1 of the invention. Fig. 4 is an explanatory diagram of a second induction heating unit of the induction heating cooker according to Embodiment 1 of the invention. Fig. 5 is an explanatory circuit diagram of the second induction heating unit of the induction heating cooker according to Embodiment 1 of the invention. Fig. 6 is an explanatory diagram illustrating a configuration of heating coils of the second induction heating unit of the induction heating cooker according to Embodiment 1 of the invention. Fig. 7 is an explanatory diagram of a main heating coil of the second induction heating unit of the induction heating cooker according to Embodiment 1 of the invention. Fig. 8 is a plan view illustrating a first exemplary operation of the induction heating cooker according to Embodiment 1 of the invention. Fig. 9 is a plan view illustrating a second exemplary operation of the induction heating cooker according to Embodiment 1 of the invention. Fig. 10 is a plan view illustrating a third exemplary operation of the induction heating cooker according to Embodiment 1 of the invention.

Referring to Figs. 1 to 10, reference numeral 1 denotes an induction heating cooker of the type referred to, at times, as an island kitchen. The induction heating cooker has five induction heating units in total and is typically called a five burner induction cooktop.

This type of heating cooker is independently installed in the middle of a kitchen literally like an "island" and is a heating cooker allowing a user to face a top plate 2a made of heat-resistant tempered glass or heat-resistant resin not only from the front side of the heating cooker but also from the other side. The main body case 2 is a laterally long box-shape. A plurality of shelves serving as cupboards for cookware is disposed inside the main body case 2, and a space above these cupboards is the space where each components of the heating cooker is arranged.

Five induction heating sources 6L, 6ML, 6MR, 6RB, and 6RF are provided below the top plate 2a becoming sequentially smaller in diameter from the left to right.

Reference numeral 6L denotes a second induction heating source on the leftmost side (hereinafter, referred to as a "left IH unit"), reference numeral 6ML denotes a first induction heating source on the left side of the middle portion (hereinafter, referred to as a "middle-left IH unit"), reference numeral 6MR denotes a first induction heating source on the right side of the middle portion (hereinafter, referred to as a "middle-right IH unit"). The middle-left IH unit and the middle-right IH unit are collectively referred to as a "middle IH unit" 6M. Reference numeral 6RB denotes a rear side heating unit positioned on the right side (hereinafter, referred to as a "right-rear IH unit"), and reference numeral 6RF denotes a front side heating unit on the right side (hereinafter, referred to as a "right-front IH unit"). The right-rear IH unit and the right-front IH unit are collectively referred to as a "right IH unit" 6R. Reference numeral 6LC are heating coils of the left IH unit, reference numeral 6MLC denotes a heating coil of the middle-left IH unit, and reference numeral 6MRC denotes a heating coil of the middle-right IH unit (see Fig. 3).

As illustrated in Fig. 7, the heating coils 6LC of the left IH unit 6L includes, in its middle portion, two sections, namely, an inner coil 6LC1 that is formed into a doughnut shape by circularly winding a coil, and a doughnut-shaped outer coil 6LC2 that is continually (serially) winded from this coil. The two, that is, the outer coil 6LC2 and the inner coil 6LC1, are collectively referred to as a "main heating coil" MC.

The outside diameter D1 of the inner coil 6LC1 is 60 mm, and the outside diameter D2 of the outer coil 6LC2 is 120 mm. Furthermore, a temperature sensor 31 L described later is disposed in an annular gap formed between the outer coil 6LC2 and the inner coil 6LC1.

The left IH unit 6L includes a single main heating coil MC and four side heating coils SC1 to SC4 arranged around this main heating coil MC at predetermined intervals. Sole heating by the main heating coil MC and "cooperative heating" by energizing both the main heating coil MC and the side heating coils SC1 to SC4 at the same time can be carried out. The four side heating coils SC1 to SC4 may be collectively referred to as a "side heating coil" SC. Note that the configuration and the operation thereof will be described in detail later.

As illustrated in Fig. 3, the (left side) heating coil 6MLC of the middle-left IH unit 6ML is disposed on the right side of the heating coils 6LC of the left IH unit 6L with a distance W1 therebetween, and the (right side) heating coil 6MRC of the middle-right IH unit 6MR is disposed on the right side of the heating coil 6MLC of the middle-left IH unit 6ML with a distance W2 therebetween.

The outside diameters D6 and D7 of the two heating coils 6MLC and 6MRC, respectively, are both set to 180 mm. Note that the above distance W1 is 150 mm and W2 is 30 to 50 mm. Note that the minimum outside diameter (of the bottom) of an object to be heated N that can be heated by each of the two heating coils 6MLC and 6MRC is 160 mm.

The right IH unit 6R is disposed on the right side of the (right side) heating coil 6MRC of the middle-right IH unit 6MR with a distance W3 therebetween. The right IH unit 6R includes a rear side heating coil 6RBC and a front side heating coil 6RFC disposed in front of this rear side heating coil 6RBC with a distance W4 therebetween.

The outside diameter dimension D8 of the rear side heating coil 6RBC and the outside diameter D9 of the front side heating coil 6RFC are both 120 mm. Note that W3 is 150 mm and W4 is 40 mm.

The rated maximum heating power of each of the left IH unit 6L, the middle-left IH unit 6ML, and the middle-right IH unit 6MR is 3000 W and the rated minimum heating power thereof is 100 W. However, in a case in which the middle-left IH unit 6ML and the middle-right IH unit 6MR are cooperatively heated and driven, the rated maximum heating power is 3000 W and the rated minimum heating power is 100 W.

Furthermore, when driven individually, the three, that is, the left IH unit 6L, the middle-left IH unit 6ML, and the middle-right IH unit 6MR, are set such that the number of levels of the heating power and the specific heating power value of each of the levels are totally the same. The rated maximum heating power of each of the right-rear IH unit 6RB and the right-front IH unit 6RF is both 1500 W and the rated minimum heating power thereof is set to 100 W. In a case in which the right-rear IH unit 6RB and the right-front IH unit 6RF carry out cooperative heating, the total heating power of the two heating coils 6RBC and 6RFC is set to 1500 W, and the rated minimum heating power thereof is set to 100 W.

Referring to Fig. 1, reference numeral 3 denotes an inlet provided on the right side of the main body case 2 and reference numeral 4 denotes an outlet provided at a position deviated from the left end portion of the top plate 2a. A fan (not shown) introducing indoor air from the inlet 3 is disposed in the internal space of the main body case 2. The introduced air cools the five induction heating sources (IH units) 6L, 6ML, 6MR, 6RB, and 6RF and inverter circuit boards thereof (described in detail later). The air is then discharged from the outlet 4.

Referring to Fig. 3, reference numeral 5 denotes an operating unit that is provided on the upper surface of the main body case 2, in front of the top plate 2a, and with a laterally-long band shape. Reference numeral 5A denotes an operating unit of the right-front IH unit 6RF, reference numeral 5B denotes an operating unit of the right-rear IH unit 6RB, reference numeral 5C denotes an operating unit of the middle-right IH unit 6MR, reference numeral 5D denotes an operating unit of the middle-left IH unit 6ML, and reference numeral 5E denotes an operating unit of the left IH unit 6L. Reference numeral 11 denotes an operation key of a main power switch (not shown) that applies and shuts off the main power, and, is positioned in the right end portion of the operating unit 5, and, further, is capable of shutting off power of the heating units all at once.

Reference numeral 7 denotes a common display unit for the operating unit 5A of the right-front IH unit 6RF and the operating unit 5B of the right-rear IH unit 6RB and includes a liquid crystal screen.

Reference numeral 8R denotes a display unit for the operating unit 5C of the middle-right IH unit 6MR and includes a liquid crystal screen. Reference numeral 8L denotes a display unit for the operating unit 5D of the middle-left IH unit 6ML and includes a liquid crystal screen.
Reference numeral 9 denotes a display unit for the operating unit 5E of the left IH unit 6L and includes a liquid crystal screen. In the subsequent description, reference numeral 10 is used when comprehensively referring to all of the display units.

Referring next to Fig. 2, a description will be given on controllers including an energization control unit and a temperature detection unit. Reference numeral 100 denotes an energization control circuit including one, or two or more microcomputers. A control program of the overall heating cooker is stored in a storage unit inside the energization control circuit 100.

Reference numeral 31 denotes infrared sensors configured to measure the intensity of infrared radiation penetrating through the top plate 2a from the object to be heated N and detect a bottom temperature of the object to be heated N. Hereinafter, these sensors are each referred to as a "temperature sensor". In total, there are at least eleven of these temperature sensors 31 including a single temperature sensor 31A disposed in the middle portion of the main heating coil MC, four temperature sensors 31 B each disposed between a corresponding space between the main heating coil MC and the side heating coils SC or in a corresponding internal space of the side heating coils SC, a temperature sensor 31C disposed in the middle-left IH unit 6ML, a temperature sensor 31 E disposed in the middle-right IH unit 6MR, a temperature sensor 31 D disposed in a position between the (left side) heating coil 6MLC of the middle-left IH unit 6ML and the heating coil 6MRC on its right, a temperature sensor 31 F disposed in the right-rear IH unit, a temperature sensor 31G disposed in the right-front IH unit 6RF, and a temperature sensor 31 H disposed in a position between the right-rear IH unit 6RB and the right-front IH unit 6RF.

In Fig. 3, the temperature sensor 31 D is shown such that its position can be understood; however, in actuality, the temperature sensor 31 D is covered by the top plate 2a and the temperature sensor 31 D cannot be visually observed by the user (similarly, other temperature sensors 31 also cannot be visually observed).

The temperature sensor 31 D is provided in order to detect change in temperature of the object to be heated N, when a single and large object to be heated N that extend over the heating coil 6MLC of the middle-left IH unit 6ML and heating coil 6MRC of the middle-right IH unit 6MR is used to carry out cooperative heating.

Reference numeral 32 denotes a temperature detecting circuit that processes the bottom temperature data of the object to be heated N sent from the temperature sensors 31, carries out an estimation process of the temperature of the object to be heated N, and sends this result to the energization control circuit 100 in real time. As such, the temperature detecting circuit 32 is used in the temperature control operation of the energization control circuit 100 during induction heating.

The heating coils 6LC of the left IH unit 6L, the heating coil 6MLC of the middle-left IH unit 6ML, the heating coil 6MRC of the middle-right IH unit 6MR, the heating coil 6RBC of the right-rear IH unit 6RB, and the heating coil 6RFC of the right-front IH unit 6RF are each connected to a corresponding one of dedicated inverter circuits 20 to 25.

Reference numeral 20 denotes an inverter circuit for the main heating coil MC of the left IH unit 6L, reference numeral 21 denotes an inverter circuit for the side heating coils SC of the same left IH unit 6L, reference numeral 22 denotes an inverter circuit for the middle-left IH unit 6ML, reference numeral 23 denotes an inverter circuit for the middle-right IH unit 6MR, reference numeral 24 denotes an inverter circuit for the right-front IH unit 6RF, and reference numeral 25 denotes an inverter circuit for the right-rear IH unit 6RB.

Reference numeral 33 denotes a placement-of-heated-object determination unit that detects currents flowing in both the main heating coil MC and the side heating coils SC of the left IH unit 6L and detects that a common object to be heated N is placed on both the main heating coil MC and the side heating coils SC.

Furthermore, the placement-of-heated-object determination unit 33 detects the currents flowing in the heating coil 6MLC of the middle-left IH unit 6ML and heating coil 6MRC of the middle-right IH unit 6MR and detects that a single object to be heated N is placed on the two heating coils, namely, the heating coil 6MLC and the heating coil 6MRC. In actuality, it is desirable that the currents in the input side and the output side of the heating coil are both detected for a further accurate sensing. Detailed operation will be described in detail later. Note that, similarly, the placement-of-heated-object determination unit 33 detects the currents flowing in the heating coil 6RBC of the right-rear IH unit 6RB and the heating coil 6RFC of the right-front IH unit 6RF and detects that a single object to be heated N is placed on the two heating coils.

Referring to Figs. 3 and 8, reference characters CL1 denotes a front-rear center line of the top surface of the main body case 2 and reference characters CL2 denotes a front-rear center line of the top plate 2a. As shown in Fig. 7, reference characters CL3 denotes a center line in the front-rear direction that passes through the center point of the main heating coil MC of the left IH portion 6L.

The configuration of the heating coil 6LC constituting the left IH unit 6L will be described next.

Fig. 4 is a block diagram illustrating the components that control the left IH unit 6L.

As illustrated in Fig. 6, the four side heating coils SC1 to SC4 are each arranged such that a predetermined space GP1 is kept with the circumference of the main heating coil MC.

A substantially uniform space SP is kept between each of the mutual heating coils in the four side heating coils SC1 to SC4. The four side heating coils SC1 to SC4 are secured on a heat-resistant-resin support frame that allows air to pass therethrough, which is generally called a coil base. The dimension of each space SP is set twice or more as large as the space GP1 between each of the side heating coils SC1 to SC4 and a peripheral line of the main heating coil MC.

Similar to the main heating coil MC, these side heating coils SC1 to SC4 are formed by bundling about twenty to thirty fine coil wires each with a diameter of 0.1 to 0.3 mm (hereinafter, referred to as "assembled wire"), twisting one or a plurality of the assembled wires while spirally winding the assembled wires in a predetermined direction so that they become to have an ellipse or oval outer shape, and then partially binding them with a binding tool or hardening their entirety with heat-resistant resin so that the shape is maintained. The four side heating coils SC1 to SC4 have a same planar shape, and the dimensions of the length, width, and height (thickness) are all the same. Accordingly, four side heating coils of the same kind are fabricated and are disposed at four positions.

As shown in Fig. 6, in the circumference of the main heating coil MC having a radius R1 from the center point X1, the tangential direction just coincides with the center line of each of the side heating coils SC1 to SC4 in their longitudinal direction. In other words, the tangential direction is in accord with the major axis direction.

The side heating coils SC1 to SC4 electrically constitute a single closed circuit while each assembled wires are bent and extended into an elliptical shape (see Fig. 6). Furthermore, the dimension of the main heating coil MC in the vertical direction (the height, also referred to as "thickness") and the dimension of each of the side heating coils SC1 to SC4 in the vertical direction are the same. Moreover, the main heating coil MC and the side heating coils SC1 to SC4 are horizontally disposed and secured such that the facing distances between their top surfaces and the bottom surface of the top plate 2a are the same.

Referring to Fig. 6, reference characters D2 denotes a dimension of the outside diameter of the main heating coil MC, reference character D3 denotes a dimension of a circle that connects the midpoint of each of the side heating coils SC1 to SC4 in the width direction, reference characters D4 denotes a dimension of a circle that connects the outermost peripheral point of each of the side heating coils SC1 to SC4, and reference characters D5 denotes the maximum dimension of the outer diameter of the object to be heated N, such as a metal pan, allowed to be induction-heated by the induction heating source on the left.

Reference characters WA is a dimension of the breadth (also referred to as "thickness" or "minor axis") of each of the side heating coils SC1 to SC4. Furthermore, reference characters L1 is a major axis of each of the side heating coils SC1 to SC4.

Exemplary dimensions of each of the parts described above is as follows.
GP1: 10 mm
D1: 60 mm
D2: 120 mm
D3: 188 mm
D4: 236 mm
L1: 120-125 mm
WA: 48 mm

Owing to the dimension of D4, a metal pan, a griddle, or the like with the bottom portion having an outer diameter DW of about 240 mm to about 300 mm can be induction-heated.

Fig. 5 is a block circuit diagram of a power supply device built in the heating cooker. Broadly, the power supply device according to the invention includes a converter 76 (referred to as a "diode bridge circuit" or a "rectifier bridge circuit", for example) that converts three-phase alternating current power into direct current, a smoothing capacitor 86 connected to an output terminal of the converter 76, a main inverter circuit (power circuit) MIV for the main heating coil MC connected in parallel to this smoothing capacitor 86, as well as sub inverter circuits (power circuit) SIV1 to SIV4 for the side heating coils SC1 to SC4 connected in parallel to the smoothing capacitor 86. Note that a middle induction heating source 6M and a right induction heating source 6R that are described later are not depicted in this drawing. Furthermore, in the subsequent description, reference characters "SC" is used when the four side heating coils SC1 to SC4 are referred to collectively. Similarly, reference characters "SIV" is used when the four sub inverter circuits SIV1 to SIV4 are referred to collectively.

The main inverter circuit 20 illustrated in Fig. 2 is the main inverter circuit MIV illustrated in Fig. 4, and the sub inverter circuit 21 illustrated in Fig. 2 is the sub inverter circuit SIV illustrated in Fig. 4. Each of the inverter circuits converts the direct current from the converter into a high-frequency current and supplies the high-frequency current independently (of each other) to the corresponding one of the main heating coil MC and the side heating coils SC.

Generally, impedance of an induction heating coil changes depending on whether there is an object to be heated N placed over the induction heating coil and on the size (area) of the object to be heated N. Amperage of the main inverter circuit MIV and the sub inverter circuits SIV changes accordingly. The power supply device according to the invention includes a current detection unit provided with a current sensor for detecting the amperage of each of the main heating coil MC and the side heating coils SC. This current detection unit is a part of the configuration of the placement-of-heated-object determination unit (state-of-placement-of-heated-object detection means) 33 described later. Furthermore, a similar current sensor is disposed for each of the other heating coils.

According to the invention, the current detection unit of the placement-of-heated-object determination unit 33 is used to detect the amperage of the main heating coil MC and the side heating coils SC and to estimate whether there is an object to be heated N placed above each coil or whether the bottom area of the object to be heated N is larger than a predetermined value. This estimated result is transmitted to the energization control circuit 100. As such, the placement state of the object to be heated N can be accurately detected.

Note that, as a sensor to detect the placement state of the object to be heated N, other optional sensors such as a mechanical sensor or an optical sensor may be used in place of the current detection unit that detects the amperage of the main inverter circuit MIV and the side inverter circuits SIV.

As shown in the drawing, the energization control circuit 100 of the power supply device of the invention is connected to the placement-of-heated-object determination unit 33 and provides a control signal to the main inverter circuit MIV and the sub inverter circuits SIV in accordance with the placement state of the object to be heated N. That is, the energization control circuit 100 receives a signal (data indicating the placement state of the object to be heated N) related to the amperage of the main heating coil MC and the side heating coils SC1 to SC4 detected by the placement-of-heated-object determination unit 33, and when it is determined that that there is no object to be heated N placed or that the diameter of the object to be heated N is smaller than a "predetermined value" (100 mm, for example), then the main inverter circuit MIV and the sub inverter circuits SIV are selectively controlled such that supply of the high-frequency currents to the main heating coil MC and the side heating coils SC1 to SC4 are prohibited or (if already has been supplied) stopped. Note that the above "predetermined value" is 100 mm because the diameter D2 of the main heating coil MC is 120 mm; hence, when the diameter D2 changes, the predetermined value also changes. In actuality, it is desirable that the optimum predetermined value be set after testing the actual degree of heating and the like.

According to the invention, the energization control circuit 100 is capable of controlling the power feeding to each of the main heating coil MC and the side heating coils SC1 to SC4 independent of each other by supplying the control signal to the main inverter circuit MIV and the sub inverter circuits SIV in accordance with the placement state of the object to be heated N.

Further, by not driving the main heating coil MC at the center (switching it to an OFF state) and by driving all of the side heating coils SC1 to SC4 (switching them to an ON state), it is possible to carry out cooking methods such as preheating of only the pan surface (side of the pan) of a frying pan and the like.

Note that a switch allowing the user to optionally prohibit cooperative heating operations of the left IH unit 6L, that is, simultaneous heating with the main heating coil MC and the side heating coils SC, may be further provided to the operating unit 5. As such, when heating a pan having an obviously small diameter with the left IH unit 6L, the user can select heating with the main heating coil MC alone, rather than by cooperative heating. That is to say, by detecting the amperage of the main heating coil MC and the side heating coils SC with the placement-of-heated-object determination unit 33, there will be no need for the energization control circuit 100 to estimate and process whether there is an object to be heated N above each coil or whether the bottom area of the object to be heated N is larger than a predetermined value.

Description will be given next on the "heating power" that determines the heating amount when cooking with the left IH unit 6L, the middle IH units 6MR and 6ML, and the right IH unit 6R.

The energization control circuit 100 sets the control range of each heating power as follows, and the user can optionally select a desired heating power from these heating power values with the operating unit 5.

Left IH unit 6L: rated maximum heating power 3000 W, rated minimum heating power 100W.

As for the heating power value, there are nine levels, namely, 100 W, 300 W, 500 W, 750 W, 1000 W, 1500 W, 2000 W, 2500 W, and 3000 W.

Middle IH units 6MR and 6ML: rated maximum heating power 3000 W, rated minimum heating power 100W.

As for the heating power value, there are nine levels, namely, 100 W, 300 W, 500 W, 750 W, 1000 W, 1500 W, 2000 W, 2500 W, and 3000 W.

Right IH units 6RB and 6RF: rated maximum heating power 1500 W, rated minimum heating power 100W.

As for the heating power value, there are 15 levels in total in every 100 W from 100 W to 1500 W.

When the main heating coil MC and a part of or all of the side heating coils SC are heat driven at the same time, it is preferable from the viewpoint of heating efficiency that the direction of the high-frequency current flowing in the main heating coil MC and the direction of the high-frequency current flowing in each of the side heating coils SC are the same on their adjacent sides. This is because, in an area where two independent coils are adjacent to each other, when the currents of the coils flow in the same direction, the magnetic fluxes generated by the currents intensifies each other, the density of the magnetic flux that interlink with the object to be heated N is increased, and more eddy current is generated on the bottom of the object to be heated; hence, efficient induction heating is enabled.

The main inverter circuit MIV for the main heating coil MC employs a variable frequency output control method, thus, by changing the frequency, it will be possible to vary the inverter power, that is, the obtained heating power. As the drive frequency of the main inverter circuit MIV is set higher, the inverter power is reduced and damages to the electrical and electronic elements constituting the circuit such as switching means (IGBT, for example) and a resonant capacitor are increased, leading to the increase in the amount of heat therefrom. Since this is not preferable, a predetermined upper limit frequency is determined and control is carried out such that the frequency is changed at or below the determined frequency. Electric power allowing continuous control at the upper limit frequency is the minimum electric power. When electric power lower than this is to be input, duty factor control, which performs intermittent energization, may be used in combination to obtain an ultimate low heating power. The heating power control of the inverter circuits SIV for the side heating coils may be carried out in the same manner.

Furthermore, the drive frequency for driving the main inverter circuit MIV is basically set to be the same as the drive frequency for the sub inverter circuits SIV for the side heating coils. If it is to be changed, the energization control circuit 100 controls the drive frequency difference between the two frequencies to be out of the range of 15 to 20 kHz such that the difference between the two does not enter the audio frequency range. This is because, when two or more induction heating coils are driven at the same time, depending on the frequency difference, the frequency difference becomes a cause of unpleasant sound such as the ones called beat noise or interference noise.

Note that the main inverter circuit MIV and the sub inverter circuits SIV for the side heating coils do not have to be driven at the same time. For example, depending on the heating power instructed by the energization control circuit 100, the heating operation may be switched alternately at short intervals.

As described above, all of the heating coil units are provided with a current sensor configured to detect a current flowing in a resonance circuit including a parallel circuit of a heating coil and a resonant capacitor. The detection output of each of the current sensors provided in every one of the IH units (induction heating units) is input to the placement-of-heated-object determination unit (state-of-placement-of-heated-object detection means) 33; through this, determination information on whether there is an object to be heated is supplied to the energization control circuit 100, and determination of the presence of the object to be heated N is performed.

Further, if an inappropriate pan (object to be heated N) is used for induction heating or if by some kind of accident, an undercurrent or an overcurrent that has a value difference equivalent to or above a predetermined value when compared with a normal current value is detected, the energization control circuit 100 controls the relevant inverter circuits to instantaneously stop the energization of the induction heating coil.

As in the invention, in a heating cooker that heats an object to be heated N with the induction heating method, the power control circuit for distributing high-frequency power to the left and right IH units 6L and 6R and the middle IH unit 6M is typically referred to as a resonant inverter. The configuration is such that an on/off control of the switching circuit elements is carried out with a driving frequency of approximately 20 to 40 kHz to a circuit connecting the inductance of the left and right heating coils 6LC, 6RC, and 6MC, including the object to be heated N (metal object), and the resonant capacitor to each other. Note that the inverter circuits 22 and 23 of the middle IH unit 6M have a similar configuration as that for the inverter circuits 24 and 25 of the right IH unit 6R, and the inverter circuits 22 and 23 of the middle IH unit 6M is connected to an AC power supply 75 in parallel with the inverter circuits 24 and 25 of the right IH unit 6R.

Further, as regards the resonant inverter, there is a current resonance type suitable for a 200-V power supply and a voltage resonance type suitable for a 100-V power supply. As for the configuration of the resonant inverter circuit, the resonant inverter circuit is separated into circuits that are so-called a half bridge circuit and a full bridge circuit depending on, for example, to where the connection targets of the heating coils 6LC and 6RC and the resonant capacitors are switched by the relay circuit.

The full bridge circuit used in Embodiment 1 of the invention is illustrated in Fig. 5.

Specifically described, there is included a power unit (power circuit) 74. The power unit 74 includes a DC power unit 80, the main inverter circuit MIV, and four sub inverter circuits SIV1 to SIV4. Note that in Fig. 5, only the main inverter circuit MIV is depicted; however, the four sub inverter circuits SIV1 to SIV4 having the same configuration as that of the main inverter circuit MIV are each connected in parallel to the energization control circuit 100. The four sub inverter circuits SIV1 to SIV4 are connected to the DC power unit 80 via connecting points CP1 and CP2, CP3 and CP4, CP5 and CP6, and CP7 and CP8, respectively.

As it is apparent from the above description, the four sub inverter circuits SIV1 to SIV4 are each connected in parallel to the DC power unit 80 and the energization control circuit 100.

The AC power supply 75 is a single-phase or three-phase commercial AC power supply. The AC power supply 75 is connected to the rectifier circuit 76 that rectifies all the AC current output from this AC power supply 75. The rectifier circuit 76 is connected to the smoothing capacitor 86 that performs smoothing of the direct-current voltage that has been rectified in its entirety by the rectifier circuit.

The main inverter circuit MIV and the four sub inverter circuits SIV1 to SIV4 are full bridge inverters that, after conversion of AC to DC, further converts this direct current into an alternating current with high frequency. Each of the inverter circuits MIV and SIV1 to SIV4 is connected to the DC power unit 80 of the power unit 74.

The main inverter circuit MIV and the sub inverter circuits SIV1 each include a couple (also referred to as a "pair" or a "group") 77A and 78A of two pairs of switching elements. As shown in the drawing, the couple 77A and 78A of the switching elements of the main inverter circuit MC each include two respective switching elements 79A and 81A, and 88A and 89A that are connected in series. Although not illustrated in the four sub inverter circuits SIV1, SIV2, SIV3, and SIV4, the four sub inverter circuits are each provided with two pairs of switching elements that are similar to that of the main inverter circuit MC.

In the main inverter circuit MIV, a series resonance circuit including the main heating coil MC and a resonant capacitor 110A is connected between the output points of the switching elements 79A and 81A and the output points of the switching elements 88A and 89A. Although not illustrated, similar to the main inverter circuit MIV, the four sub inverter circuits SIV1, SIV2, SIV3, and SIV4 are each connected to a series resonance circuit including the corresponding one of the side heating coils SC1 to SC4 and a resonant capacitor (not shown).

The two pairs of switching elements constituting the couple 77A and 78A of the main inverter circuit MIV are connected to the driving circuits 228A and 228B. respectively. Furthermore, although not illustrated, a driving circuit is connected to each of the four sub inverter circuits SIV1, SIV2, SIV3, and SIV4 in a manner similar to that of the main inverter circuit MIV. Additionally, the driving circuits 228A and 228B of the main inverter circuit MIV and each driving circuit of the four sub inverter circuits SIV1 to SIV4 are connected to the energization control circuit 100 via the placement-of-heated-object determination unit 33. Note that the driving timings of the couple 77A and 78A of the two pairs of switching elements of the main inverter circuit MIV are controlled with the driving circuits 228A and 228B. The amperage of the main heating coil MC can be controlled by controlling the phase difference.

With the above configuration, the energization control circuit 100 has a function of controlling the main inverter circuit MIV and the sub inverter circuits SIV such that the direction of high-frequency currents IB applied to the four side heating coils SC1 to SC4 and the direction of the high-frequency current applied to the main heating coil MC are the same (in the counterclockwise direction) in the areas where the coils are adjacent to each other (the outer circumference area of the main heating coil) when a high-frequency current is distributed to the main heating coil MC in the clockwise direction.

On the other hand, when a high-frequency current is distributed to the main heating coil MC in the counterclockwise direction, the main inverter circuit MIV and all of the sub inverter circuits SIV1 to SIV4 are controlled such that the high-frequency currents applied to the side heating coils SC1 to SC4 flow in the same direction (in the clockwise direction) in the areas where the coils are adjacent to each other. As described above, generation of abnormal noise due to frequency difference can be suppressed.

Upon start of cooking, when the user instructs a heating preparation operation after activating the main power by operating the key 11 of the operating unit 5 at first, the placement-of-heated-object determination unit 33 estimates whether there is an object to be heated N placed above each of the main heating coil MC and the side heating coils SC and whether the bottom area of the object to be heated N is larger than a predetermined value. This estimation results are transmitted to the energization control circuit 100 serving as a control unit.

In the energization control circuit 100, whether to carry out a heating process suitable for a large-diameter pan, whether to carry out a heating process suitable for a normal-sized pan, and the like are determined (a predetermined small current is distributed to the heating coils and the results are detected by current sensors).

As for a suitable normal-sized pan, a suitable small-sized pan, an unsuitable pan, or the like, the process is different to that for a large-diameter pan.

With the above process, the preparation of moving on to a cooking step subject to a large-diameter pan is completed, and after selection of the cooking menu, induction heating operation is promptly started. Note that a pan with a pan bottom of about 120 mm to about 180 mm in diameter is referred to as a "normal-sized pan" and a pan with a pan bottom smaller than 120 mm in diameter is referred to as a "small-diameter pan". In the case of these pans, the steps carried out are basically similar to that described above. Note that the "diameter" described herein is the diameter of the pan bottom. Accordingly, the diameter dimension of the body of the pan is larger.

In the case of the "normal-sized pan" or the "small-diameter pan", cooking menus, such as "water-boiling" and "heat-retaining", are also displayed on the display units 10; however, in the case of the "normal-sized pan" or the "small-diameter pan", since heating can be performed only with the main heating coil MC in the center in Embodiment 1, the control contents

(heating power, the energization pattern, and the like) are greatly different. Naturally, there is no heating pattern in which the side heating coils SC are used since it is not possible to individually heat drive all or part of the side heating coils SC.

Further, basic information to determine whether the same single object to be heated N is placed above is input to the placement-of-heated-object determination unit 33 from the current sensor of the main heating coil MC and the four current sensors of the side heating coils SC. By detecting the current change, the placement-of-heated-object determination unit 33 detects the impedance change of the main heating coil MC and the side heating coils SC. The energization control circuit 100 issues a command signal to drive the main inverter circuit MIV of the main heating coil MC and each sub inverter circuit SIV of the side heating coils SC on which the rectangular or elliptical pan (object to be heated N) is placed, distributes a high-frequency current to (at least one of) the side heating coils that is placed with the elliptical pan (object to be heated N), among the four side heating coils SC1 to SC4, and suppresses or stops distributing high-frequency current to one or some of the remaining side heating coils that is not placed with the elliptical pan (object to be heated N).

For example, when the placement-of-heated-object determination unit 33 determines that the same singular elliptical pan (object to be heated N) is placed above the main heating coil MC and a single side heating coil SC1, the energization control circuit 100 operates only the main heating coil MC and the specific side heating coil SC1 to work in association with each other and provides high-frequency power to the two heating coils in a heating power rate set in advance from respective inverter circuits MIV and SIV1 (the heating power distribution will be described later in detail).

Here, as regards the "heating power rate", the "heating power rate" refers to a ratio of 2400 W and 600 W when, for example, the user starts cooking with the left IH unit 6L trying to cook at a heating power of 3000 W, and when the energization control circuit 100 distributes the heating power such that 2400 W is distributed to the main heating coil MC and 600 W to the side heating coil SC1. In this example, the heating power rate is 4:1.

This side heating coil SC1 cannot be driven alone to perform induction heat cooking and the other three side heating coils SC2, SC3, and SC4 cannot perform induction heat cooking by itself or by combination. In other words, the feature is such that one or some of the four side heating coils SC1, SC2, SC3, and SC4 that are disposed around the main heating coil MC are only heated and driven at the same time when the main heating coil MC is driven. For example, in a control program for the energization control circuit 100, there is a control pattern in which the four side heating coils SC1, SC2, SC3, and SC4 are driven when an object to be heated N with a large diameter that covers all of the four side heating coils SC1, SC2, SC3, and SC4 is placed.

As for the actual driving pattern, there are patterns as follows.

First pattern: in a case in which the main heating coil MC is heat driven, all or part of the side heating coils SC1, SC2, SC3, and SC4 are heat driven in a predetermined order and with predetermined heating powers at the same time as the main heating coil MC.

Second pattern: during the period in which the main heating coil MC is heat driven, all or part of the side heating coils SC1, SC2, SC3, and SC4 are heat driven in a predetermined order and with predetermined heating powers.

Note that when the operation key 11 of the main power switch is turned ON, all of the operating units 5A, 5B, 5C, 5D, and 5E are lighted first by a light source (not shown) under the top plate 2a, and the group of operation keys are displayed. Here, when a touch operation is carried out to a desired operation key, with this operation, one of the display units 10 (7, 8R, 8L, and 9) that are positioned adjacently to this specific operation key is lighted by a back light and the display operation is started. For example, when the operating unit 5E is operated, the back light of the display unit 9 alone is turned on. Here, when continually operated, the result of the operation is displayed each time on the display unit 10, and necessary information is displayed. As part of the display, a capacitance touch input key is displayed. When the user gives a start of heating instruction by carrying out a touch operation of a specified key that has been displayed, the energization control circuit 100 described later heat drives a specific induction heating source.

In this embodiment, various switching circuit elements, for example, the switching elements 79A, 81A, 88A, and 89A illustrated in Fig. 5, that are formed of silicon are illustrated; however, they may be formed of a wide bandgap semiconductor that has a large bandgap, compared with silicon. The wide bandgap semiconductor may include, for example, silicon carbide, gallium nitride based materials, diamond, or gallium nitride (GaN). Switching elements and diode elements formed of the wide bandgap semiconductor as above has high withstanding voltage property and, further, has high allowable current density; hence, it is possible to downsize the switching elements and diode elements. It is possible to downsize the semiconductor module built-in with these elements by using these downsized switching elements and diode elements.

Furthermore, since the above switching elements and diode elements have a strong heat-resisting property, it is possible to downsize the radiation fin of a heat sink or to change a water-cooled unit to air-cooling, thus, further downsizing of the semiconductor module is possible.

Additionally, since power loss is small, efficiency of the switching elements or the diode elements can be made high and, consequently, efficiency of the semiconductor module can be made high.

As illustrated in Fig. 2, a circuit board equipped with the inverter circuits 24 and 25 for the right IH unit 6R and inverter circuits 22 and 23 for the middle IH unit 6M is disposed inside the main body case 2.

Similarly, the inverter circuits 20 and 21 of the left IH unit 6L are also disposed. Especially, the inverter circuits 20 and 21 include the inverter circuit MIV for the main heating coil MC and the inverter circuits SIV for the four side heating coils SC. As such, the number of the switching elements or the diode elements used is by far large, compared with that used in the inverter circuits 24 and 25 for the right IH unit 6R and the inverter circuits 22 and 23 for the middle IH unit 6M.

Accordingly, there exists, more than ever, a greater need for downsizing the semiconductor module built-in with these switching elements and diode elements.

In Embodiment 1, the above problem can be overcome more easily than before by using the switching elements and the diode elements formed of the wide bandgap semiconductor. That is, since the wide bandgap semiconductor has a strong heat-resisting property, it is possible to downsize the radiation fin for cooling that is mounted with the semiconductor switching element that generates heat in accordance with the power control, and, consequently, it is possible to reduce the installation space of the circuit board and to install the circuit board inside the main body case 2 without force. Accordingly, flexibility in the size of the heating coil and its installation position can be obtained since the installation space of the circuit board is secured. As a result, it is possible to arrange and dispose a plurality of induction heating coils, including a heating coil with a large outside diameter such as the left IH unit 6L, in the limited area of the top surface portion of the main body case 2 with an arrangement and at a position with good usability.

Note that it is desirable that both the switching elements and the diode elements are formed of the wide bandgap semiconductor; however, only either one of the elements may be formed of the wide bandgap semiconductor. In this case, the same advantageous effects described above can be obtained.

Note that in Figs. 6 to 10, hatching applied portions indicate a heat driven state or a state in which display operation is carried out. As regards the display unit 10, when the corresponding induction heating source (IH unit) is not heat driven, the back light is turned on first and is automatically turned off after elapse of a fixed time, thus returning to a state in which nothing is displayed.

Having the above configuration, in the left IH unit 6L, when an object to be heated N with a size allowing heat cooking with the main heating coil MC alone, for example, a pan that has a pan bottom of 140 mm in diameter, is placed, then, only the main heating coil MC with the diameter D2 of 120 mm is heat driven by the energization control circuit 100. For example, if an elliptical or a rectangular pan, in which the pan bottom has a major axis of 240 mm and a minor axis of 150 mm, or a metal griddle is placed, the placement-of-heated-object determination unit 33 detects the state of the object to be heated N, the main heating coil MC and one or a plurality of side heating coils SC are driven at the same time according to the placed position of the object to be heated N, and high-frequency power is supplied from the inverter circuits 20 and 21.

As above, in the left IH unit 6L, even when the bottom is rectangular or elliptical in shape, it is possible to carry out heat cooking by combining the main heating coil MC and one or a plurality of side heating coils SC1 to SC4 and perform cooperative heating with them.

Furthermore, the heating coil 6MLC of the middle-left IH unit is 180 mm in diameter, the (right side) heating coil 6MRC of the middle-right IH unit 6M is also 180 mm in diameter, and the mutual distance W2 between these two heating coils 6MLC and 6MRC are set to 30 to 50 mm; accordingly, it is possible to cooperatively heat drive the two heating coils 6MLC and 6MRC when a non-circular object to be heated N with a major axis of 250 mm and a minor axis of 100 mm, for example, a rectangular metal plate for broiling, is placed as indicated by broken lines in Fig. 10. In this case also, the placement-of-heated-object determination unit 33 detects the placement state of the large object to be heated N, and high-frequency power is supplied from the two inverter circuits 22 and 23. In this case, the high-frequency power supplied from the two inverter circuits 22 and 23 are made to cooperate so that they do not interfere with each other.

Here, "cooperate" refers to, when two heating coils are both operated, making, with the energization control circuit 100, the operation of one of the inverter circuits and the operation of the other one of the inverter circuits cooperate such that either one of start of heating, stop of heating, or change of heating power is timed to coincide. This timing refers to coincidence of both the starting time and the ending time. Furthermore, when the operation frequency of one inverter and the operation frequency of the other inverter differ, the difference turns into audible sound and may be caught by the user as an unpleasant noise. Accordingly, when two or more inverter circuits are operated at the same time, the energization control circuit 100 performs control such that the operation frequencies of the operated plurality of inverter circuits coincide. Furthermore, even when the heating power during induction heating is increased or decreased on the basis of the temperature detection data of the temperature sensors 31, control is performed such that the heating power set by the user is appropriately distributed to the plurality of inverter circuits.

As described above, in Embodiment 1, the control program of the energization control circuit 100 may set the diameter D3 (188 mm) of a circle that includes therein all of the side heating coils SC of the left IH unit 6L as its reference such that the two neighboring middle-left IH unit 6ML and the middle-right IH unit 6MR are cooperatively heat driven in order to cope with an object to be heated N with an abnormally large shape of more than, for example, 200 mm,.

On the other hand, a case of an elliptical or a rectangular object to be heated N that has a size that is larger than the diameter of the main heating coil MC but a size that cannot be cooperatively heated by the adjacent middle-left IH unit 6ML and the middle-right IH unit 6MR can be coped with by cooperatively heat driving both the main heating coil MC and the adjacent side heating coils SC of the left IH unit 6L.

Furthermore, as for the two, that is, the middle-left IH unit 6ML and the middle-right IH unit 6MR, as described above, since the minimum outside diameter or the object to be heated N capable of being heated is 150 mm, in a case of a pan with a small-diameter, for example, 130 mm, that cannot be coped with by either one of the two, heating can be carried out by either one of the right-rear IH unit 6RB and the right-front IH unit 6RF that each has a heating coil diameter of 120 mm.

As such, in Embodiment 1, heat cooking can be carried out while coping with an object to be heated N with a variety of size and shape; hence, usability is further improved.

As illustrated in Fig. 10, by allowing the two right-rear IH unit 6RB and the right-front IH unit 6RF to perform cooperative heating, pans with more variety in sizes and shapes can be coped with. In this case, while the middle-left IH unit 6ML and the middle-right IH unit 6MR are arranged side by side to the left and right, and are allowed to cope with a laterally long object to be heated N, since the right-rear IH unit 6RB and the right-front IH unit 6RF are arranged in the front-rear direction, they can cope with a heating object N that is long in the front-rear direction when carrying out cooperative heating. Additionally, since the right-rear IH unit 6RB and the right-front IH unit 6RF are small in diameter, compared with those of the heating coils 6MLC and 6MRC of the middle-left IH unit 6ML and the middle-right IH unit 6MR, the pan that is to be cooperatively heated using the right-rear IH unit 6RB and the right-front IH unit 6RF is one that is relatively small in size that can be held with one hand, such as a square pan for an omelet. Accordingly, since the cooperative heating area extends in the front-rear direction, it is easy for the user to use the pan when cooking with the handle of the above pan in hand.

Meanwhile, considering the diameters, and spacing and arrangement of the heating coils 6MLC and 6MRC, the object to be heated N subject to cooperative heating by the middle-left IH unit 6ML and the middle-right IH unit 6MR is assumed to be a large one that has a major axis of over 300 mm. This kind of large pan is handled with both hands, and thus it is assumed that the handles normally protrude to the left and right. In Embodiment 1, a relatively wide width W1 (in this case, 150 mm or more) is obtained on the left side of the middle-left IH unit 6ML, and, a relatively wide width W3 (in this case, 150 mm or more) is obtained on the left side of the middle-right IH unit 6MR; hence, even if a large non-circular pan is placed during cooperative heating of the middle IH unit 6M, there is little possibility that the pan will get in the way when cooking is carried out by the other adjacent heating units positioned on the left side and right side.

Note that, as depicted by arrows DY and DX, when cooperative heating is carried out in two places, it is desirable that the longitudinal directions of the cooperative heating areas are made different to each other form the viewpoint of usability. In a case in which the area of the cooperative heating area is small, it is desirable that the heating coils are provided in the front-rear direction like the heating coils 6RBC and 6RFC of the right-rear IH unit 6RB and the right-front IH unit 6RF.

A case can be assumed in which a pan is moved to the adjoining heating unit after start of boiling, and stew cooking is continued for a long period of time with the heating unit where the pan has been moved. In such a case, control of heating power is facilitated and usability is high since the rated maximum heating power of the entire Left IH unit 6L and the entire middle IH unit 6M are each unified to 3000 W and the rated minimum heating powers are unified to 100W. Furthermore, since the left IH unit 6L and the middle IH unit 6M are set such that the number of levels of the heating power and the specific heating power value of each of the levels are totally the same, usability is high in the same manner.

Note that by modifying the configuration of the inner coil 6LC1 and the outer coil 6LC2 constituting the main heating coil MC such that heat driving is allowed to be carried out separately, then, it will be possible for even the left IH unit 6L to cope with a further small-diameter pan by having the inner coil 6LC1 with the outside diameter of 130 mm carry out sole heating.

### Embodiment 2

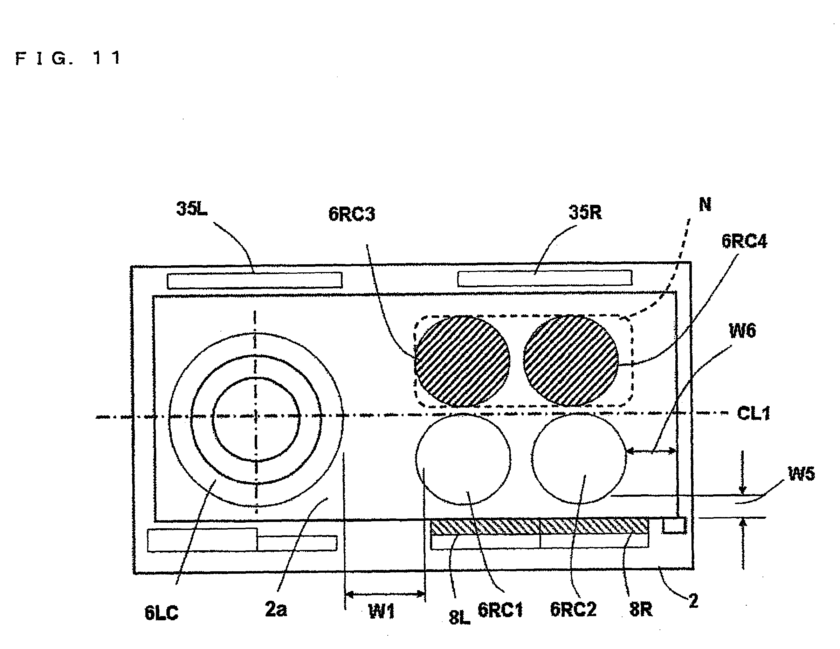

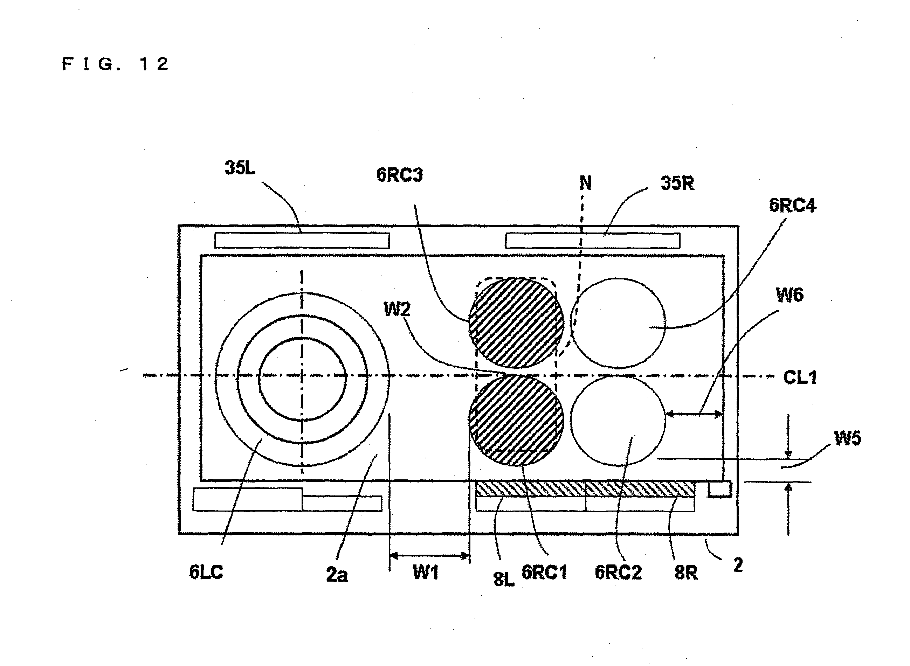

Fig. 11 is a plan view illustrating an exemplary operation of the induction heating cooker according to Embodiment 2 of the invention, and Fig. 12 is an explanatory diagram illustrating an exemplary operation of the induction heating cooker according to Embodiment 2. In Figs. 11 and 12 as well, each of the heating coils on which hatching is applied indicate that it is heat driven.

Referring to Figs. 11 and 12, heating coils 6RC1 to 6RC4 are each heating coils with an outside diameter dimension of about 100 mm. Four heating coils in total are arranged at a fixed interval in the front-rear and left-right directions. The mutual distances W2 between each of the heating coils 6RC1 to 6RC4 in the front-rear and left-right directions are about 20 to 30 mm. Accordingly, four inverter circuits (not shown) each supplying high-frequency power to the corresponding one of the four heating coils are provided.

Reference numeral 35R is an inlet provided in the right rear portion of the top surface of the main body case 2 and is for introducing indoor air for cooling into the main body case 2 with a fan. Reference numeral 35L is an outlet provided in the left rear portion of the top surface of the main body case 2 and is for discharging air for cooling that has been introduced inside the main body case 2 out of the main body case 2.

Note that the facing distance W1 between the left IH unit 6L and the right IH unit 6R is 100 mm, and the distance W6 between the right IH unit 6R and the substantially right end portion of the top plate 2a is 100 mm. Reference characters W5 denotes the distance between the right IH unit 6R and the substantially front end portion of the top plate 2a, and is 40 mm to 50 mm. Since a frame of a picture frame shape having a width of about 10 to 20 mm covers the peripheral line of the top plate 2a, the "substantially right end portion" and the "substantially front end portion" refer to the end portion of the frame. Other configurations are the same as Embodiment 1 and like parts are designated by like reference numerals and description thereof is omitted.

Since having the above configuration, even when the bottom is rectangular or elliptical in shape, it is possible to carry out heat cooking in the left IH unit 6L by combining the main heating coil MC and one or a plurality of side heating coils SC1 to SC4 and perform cooperative heating therewith.

Furthermore, the right IH unit 6R constituting the first induction heating unit includes four heating coils 6RC1 to 6RC4 and while, as a matter of course, it is possible to carry out heating with each heating coil alone, cooperative heating may be carried out by driving two heating coils aligned front-to-rear or two heating coils aligned right-to-left among the four heating coils 6RC1 to 6RC4.

Among the four heating coils 6RC1 to 6RC4, the mutual distance W1 between the heating coils 6RC1 and 6RC3 on the left side and the heating coil 6LC of the left IH unit 6L is set to 100 mm, and on the other hand, the distance W6 between the heating coils 6RC2 and 6RC4 on the right side and the substantially right end portion of the top plate 2a is also set to 100 mm; accordingly, when a non-circular object to be heated N with a major axis of 230 mm and a minor axis of 100 mm is placed as illustrated by broken lines in Fig. 11 and Fig. 12, it is possible to perform heating by carrying out cooperative heating with the combination of the two heating coils such as 6RC1 and 6RC3, or 6RC3 and 6RC4 that are covered above with the object to be heated N.

In this case as well, the placement-of-heated-object determination unit 33 determines that a single object to be heated N is present on the two heating coils among the four heating coils 6RC1 to 6RC4, and the energization control circuit 100 performs control such that high-frequency power is supplied to the relevant inverter circuits. Note that when the object to be heated N is a large square or circular pan that covers the four heating coils 6RC1 to 6RC4, the four heating coils 6RC1 to 6RC4 may be allowed to be driven at the same time. Note that each of the four heating coils 6RC1 to 6RC4 can be heat driven alone and the heating power thereof can be set independently; hence, it is desirable that one or more temperature detection unit of the temperature sensor, such as an infrared sensor, is provided to each of the four heating coils 6RC1 to 6RC4 in order to reliably perform temperature control of each of the heating coils 6RC1 to 6RC4.

### Reference Signs List

D1 outside diameter of the inner coil 6LC1; D2 outside diameter of the outer coil 6LC2; D3 outside diameter of the heating coil of the left IH unit; D4 outside diameter of the left-side heating coil of the middle-left IH unit; D5 outside diameter of the right-side heating coil of the middle-left IH unit; SC (SC1 to SC4) side heating coils; W1 to W6 mutual distance; MIV main inverter circuit of the main heating coil; SIV (SIV1 to SIV4) sub inverter circuits of the side heating coils; 1 heating cooker; 2 main body case; 2a top plate; 3 inlet; 4 outlet; 5 operating unit; 5A operating unit of the right-front IH unit 6RF; 5B operating unit of the right-rear IH unit 6RB; 5C operating unit of the middle-right IH unit 6MR; 5D operating unit of the middle-left IH unit 6ML; 5E operating unit of the left IH unit; 6L second induction heating unit (left IH unit); 6LM first induction heating unit (middle-left IH unit); 6MR first induction heating unit (middle-right IH unit); 6R right IH unit; 6RB third induction heating unit (right-rear IH unit); 6RF third induction heating unit (right-front IH unit); 6LC1 inner coil; 6LC2 outer coil; 6MLC heating coil; 6MRC heating coil; 6RC1 to 6RC4 heating coil; 6RBC heating coil; 6RFC heating coil; 7 common display unit; 8R display unit; 8L display unit; 9 display unit; 10 display unit; 11 operation key of the main power switch; 20 to 25 inverter circuit; 31 temperature sensor; 31A to 31 G temperature sensor; 33 placement-of-heated-object determination unit; 35R inlet; 35L outlet; and 100 energization control circuit.

## Claims

1. An induction heating cooker, comprising:
a first induction heating unit (6M) that cooperatively heats a single object to be heated with two or more heating coils (6MLC, 6MRC) having same outside diameter dimensions (D6, D7) that are adjacent to each other and that are driven independently of each other for heating;
a second induction heating unit (6L) that is arranged and disposed laterally next to the first induction heating unit (6M), the second induction heating unit (6L) including a circular main heating coil (MC) at a center portion and a plurality of side heating coils (SC) adjoining the main heating coil (MC), the main heating coil (MC) being capable of heating solely, the main heating coil (MC) and the side heating coils (SC) being capable of heating together;
a top plate (2a) positioned above the first and second induction heating units (6M, 6L), the top plate (2a) being placed with the object to be heated;
inverter circuits (21, 22, 23) that each supplies high-frequency power to a corresponding one of the first and second induction heating units (6M, 6L) individually;
an energization control circuit (100) that sends a heating operation start/stop command and a heating power command to the inverter circuits (21, 22, 23); and
an operating unit (5) that sends an operation signal to the energization control circuit (100), wherein
the outside diameter dimension (D6, D7) of the heating coils of the first induction heating unit (6M) is configured to be smaller than an outside diameter dimension (D4) of the second induction heating unit (6L) and is configured to be larger than an outside diameter dimension (D2) of the main heating coil (MC) in the second induction heating unit (6L).

2. The induction heating cooker of claim 1, wherein
the operating unit (5) is provided in a front of the top plate (2a), and
a facing distance between the first induction heating unit (6M) and the second induction heating unit (6L) is larger than a distance from the first induction heating unit (6M) to the operating unit (5).

3. The induction heating cooker of claim 1 or 2, further comprising
a placement-of-heated-object determination unit (23) that detects that a single object to be heated is placed above two adjacent heating coils (6MLC, 6MRC) of the first induction heating unit (6M) or above the main heating coil (MC) and an adjoining side heating coil (SC) of the second induction heating unit (6L), wherein
a cooperative heating operation is carried out with the heating coils in the first induction heating unit (6M) or the second induction heating unit (6L) based on processing by the placement-of-heated-object determination unit (23).

4. The induction heating cooker of claim 3, wherein the energization control circuit (100) drives the main heating coil (MC) and a side heating coil (SC) alternatively at a predetermined interval.

5. The induction heating cooker of claim 1 or 2, wherein a rated minimum heating power of the first induction heating unit (6M) and the rated minimum heating power of the second induction heating unit (6L) are set to be equivalent.

6. The induction heating cooker of any one of claims 1 to 5, wherein
the inverter circuits (21, 22, 23) each include a semiconductor switching element, and
the switching element is formed of a wide bandgap semiconductor.

7. The induction heating cooker of claim 6, wherein the wide bandgap semiconductor includes silicon carbide, gallium nitride based materials, diamond, or gallium nitride.

## Patentansprüche

1. Induktionskochfeld, das aufweist:
eine erste Induktionsheizeinheit (6M), die zusammenwirkend mit zwei oder mehr Heizspulen (6MLC, 6MRC), die die gleichen Außendurchmesser-Größen (D6, D7) haben, die zueinander benachbart sind, und die unabhängig voneinander zum Erhitzen betrieben werden, ein einzelnes zu erhitzendes Objekt erhitzt;
eine zweite Induktionsheizeinheit (6L), die seitlich neben der ersten Induktionsheizeinheit (6M) angeordnet und lokalisiert ist, wobei die zweite Induktionsheizeinheit (6L) eine kreisförmige Hauptheizspule (MC) in einem Mittelteil und eine Vielzahl von Seitenheizspulen (SC), die an die Hauptheizspule (MC) angrenzen, enthält, wobei die Hauptheizspule (MC) fähig ist allein zu erhitzen, und die Hauptheizspule (MC) und die Seitenheizspulen (SC) fähig sind, zusammen zu erhitzen;
eine Oberplatte (2a), die über der ersten und zweiten Induktionsheizeinheit (6M, 6L) positioniert ist, wobei die Oberplatte (2a) mit dem zu erhitzenden Objekt platziert wird;
Wechselrichterkreise (21, 22, 23) die jeder einzeln eine entsprechende der ersten und zweiten Induktionsheizeinheiten (6M, 6L) mit Hochfrequenzleistung versorgen;
ein Bestromungs-Steuerkreis (100), der einen Heizbetrieb-Start/Stopp-Befehl und einen Heizleistungsbefehl an die Wechselrichterkreise (21, 22, 23) sendet; und
eine Betriebseinheit (5) die ein Betriebssignal an den Bestromungs-Steuerkreis (100) sendet, wobei
die Außendurchmesser-Größe (D6, D7) der Heizspulen der ersten Induktionsheizeinheit (6M) eingerichtet ist, kleiner zu sein als eine Außendurchmesser-Größe (D4) der zweiten Induktionsheizeinheit (6L), und eingerichtet ist, größer zu sein als eine Außendurchmesser-Größe (D2) der Hauptheizspule (MC) in der zweiten Induktionsheizeinheit (6L).

2. Induktionskochfeld nach Anspruch 1, wobei
die Betriebseinheit (5) in einer Vorderseite der Oberplatte (2a) vorgesehen ist, und
ein zugewandter Abstand zwischen der ersten Induktionsheizeinheit (6M) und der zweiten Induktionsheizeinheit (6L) größer ist als ein Abstand von der ersten Induktionsheizeinheit (6M) zu der Betriebseinheit (5).

3. Induktionskochfeld nach Anspruch 1 oder 2, außerdem aufweisend
eine Platzierung-von-Geheiztem-Objekt-Bestimmungseinheit (23) die feststellt, dass ein einzelnes zu erhitzendes Objekt über zwei benachbarten Heizspulen (6MLC, 6MRC) der ersten Induktionsheizeinheit (6M) oder über der Hauptheizspule (MC) und einer benachbarten Seitenheizspule (SC) der zweiten Induktionsheizeinheit (6L) platziert ist, wobei
ein zusammenwirkender Heizbetrieb mit den Heizspulen in der ersten Induktionsheizeinheit (6M) oder der zweiten Induktionsheizeinheit (6L) auf der Grundlage einer Verarbeitung durch die Platzierungvon-geheiztem-Objekt-Bestimmungseinheit (23) durchgeführt wird.

4. Induktionskochfeld nach Anspruch 3, wobei der Bestromungs-Steuerkreis (100) die Hauptheizspule (MC) und eine Seitenheizspule (SC) alternativ in einem vorherbestimmten Intervall betreibt.

5. Induktionskochfeld nach Anspruch 1 oder 2, wobei eine bewertete Minimum-Heizleistung der ersten Induktionsheizeinheit (6M) und die bewertete Minimum-Heizleistung der zweiten Induktionsheizeinheit (6L) so eingestellt sind, dass sie äquivalent sind.

6. Induktionskochfeld nach einem der Ansprüche 1 bis 5, wobei
die Wechselrichterkreise (21, 22, 23) alle ein Halbleiter-Schaltelement enthalten, und
das Schaltelement aus einem Halbleiter mit breitem Bandabstand gebildet ist.

7. Induktionskochfeld nach Anspruch 6, wobei der Halbleiter mit breitem Bandabstand Siliciumcarbid, Galliumnitrid basierte Materialien, Diamant oder Galliumnitrid enthält.

## Revendications

1. Cuiseur à induction, comprenant :
une première unité de chauffage par induction (6M) qui chauffe un objet unique à chauffer conjointement avec deux bobines de chauffe (6MLC, 6MRC) ou davantage, ayant les mêmes dimensions de diamètre extérieur (D6, D7), qui sont adjacentes les unes aux autres et qui sont commandées indépendamment les unes des autres pour la chauffe ;
une deuxième unité de chauffage par induction (6L) qui est agencée et disposée latéralement à côté de la première unité de chauffage par induction (6M), la deuxième unité de chauffage par induction (6L) incluant une bobine de chauffe principale (MC) circulaire au niveau d'une portion centrale et une pluralité de bobines de chauffe latérales (SC) contiguës à la bobine de chauffe principale (MC), la bobine de chauffe principale (MC) étant capable de chauffer toute seule, la bobine de chauffe principale (MC) et les bobines de chauffe latérales (SC) étant capables de chauffer ensemble ;
une plaque supérieure (2a) positionnée au-dessus des première et deuxième unités de chauffage par induction (6M, 6L), la plaque supérieure (2a) étant placée avec l'objet à chauffer ;
des circuits inverseurs (21, 22, 23) qui fournissent chacun une puissance haute-fréquence à une unité correspondante parmi les première et deuxième unités de chauffage par induction (6M, 6L) individuellement ;
un circuit de commande de mise sous tension (100) qui envoie une instruction de démarrage/arrêt d'une opération de chauffe et une instruction de puissance de chauffe aux circuits inverseurs (21, 22, 23) ; et
une unité de commande (5) qui envoie un signal de fonctionnement au circuit de commande de mise sous tension (100), dans lequel
la dimension de diamètre extérieur (D6, D7) des bobines de chauffe de la première unité de chauffage par induction (6M) est configurée pour être plus petite qu'une dimension de diamètre extérieur (D4) de la deuxième unité de chauffage par induction (6L) et est configurée pour être plus grande qu'une dimension de diamètre extérieur (D2) de la bobine de chauffe principale (MC) dans la deuxième unité de chauffage par induction (6L).

2. Cuiseur à induction selon la revendication 1, dans lequel
l'unité de commande (5) est prévue dans une partie frontale de la plaque supérieure (2a), et
une distance entre la première unité de chauffage par induction (6M) et la deuxième unité de chauffage par induction (6L) se faisant face est plus grande qu'une distance entre la première unité de chauffage par induction (6M) et l'unité de commande (5).

3. Cuiseur à induction selon la revendication 1 ou 2, comprenant également une unité de détermination du placement de l'objet chauffé (23) qui détecte qu'un objet unique à chauffer est placé au-dessus de deux bobines de chauffe (6MLC, 6MRC) adjacentes de la première unité de chauffage par induction (6M) ou au-dessus de la bobine de chauffe principale (MC) et d'une bobine de chauffe latérale (SC) contiguë de la deuxième unité de chauffage par induction (6L), dans lequel
une opération de chauffe conjointe est effectuée avec les bobines de chauffe dans la première unité de chauffage par induction (6M) ou dans la deuxième unité de chauffage par induction (6L) sur la base du traitement par l'unité de détermination du placement de l'objet chauffé (23).

4. Cuiseur à induction selon la revendication 3, dans lequel le circuit de commande de mise sous tension (100) commande alternativement la bobine de chauffe principale (MC) et une bobine de chauffe latérale (SC) selon un intervalle prédéterminé.

5. Cuiseur à induction selon la revendication 1 ou 2, dans lequel une puissance de chauffe minimale nominale de la première unité de chauffage par induction (6M) et la puissance de chauffe minimale nominale de la deuxième unité de chauffage par induction (6L) sont réglées pour être équivalentes.

6. Cuiseur à induction selon l'une quelconque des revendications 1 à 5, dans lequel
les circuits inverseurs (21, 22, 23) incluent chacun un élément de commutation à semi-conducteur, et
l'élément de commutation est formé d'un semi-conducteur à bande interdite large.

7. Cuiseur à induction selon la revendication 6, dans lequel le semi-conducteur à bande interdite large inclut du carbure de silicium, des matériaux à base de nitrure de gallium, du diamant ou du nitrure de gallium.
